# EUROPÄISCHE PATENTSCHRIFT

(11) **EP 2 263 797 B1**
(45) Veröffentlichungstag und Bekanntmachung des Hinweises auf die Patenterteilung: **07.09.2011**
(21) Anmeldenummer: 10178751.3
(22) Anmeldetag: 25.06.2007
(51) Int. Cl.: B01L 3/00, G01N 21/03, G01N 21/05

(54) **Probenkammer**
Sample chamber
Chambre d'analyse

(43) Veröffentlichungstag der Anmeldung: 22.12.2010
(62) Teilanmeldung aus: 07012400.3
(73) Patentinhaber: ibidi GmbH, 82152 Martinsried (DE)
(72) Erfinder: Kahl, Valentin, 80797, München (DE)
(74) Vertreter: Grünecker, Kinkeldey, Stockmair & Schwanhäusser Anwaltssozietät

(56) Entgegenhaltungen:
- EP-A- 0 437 408
- EP-A- 1 514 596
- EP-A- 1 750 155
- WO-A1-2006/095615
- WO-A1-2007/025558
- DE-A1- 10 148 210
- DE-U1- 9 203 917
- US-A- 5 200 152
- US-A1- 2004 131 789
- US-A1- 2007 139 451
- US-B1- 7 223 364

## Beschreibung

Die Erfindung betrifft eine Probenkammer aus Kunststoff mit einem Aufnahmebereich zur Aufnahme einer Flüssigkeit.

Probenkammern der vorgenannten Art werden beispielsweise dazu verwendet, Zellkulturen zu züchten oder Zellen oder Moleküle zu untersuchen, insbesondere mikroskopisch zu beobachten. Bei den Probenkammern kann es sich beispielsweise um sogenannte 96-WellPlatten, Petrischalen, Gewebekultur- und/oder Zellkulturflaschen oder Objektprobenkammern handeln.

Eine Kammer für Zellkulturen ist beispielsweise aus der DE 100 04 135 bekannt. Eine Probenkammer in Form einer Flusskammer wird in der DE 101 48 210 beschrieben.

Bei der Mikroskopie von Molekülen (beispielsweise DNA) oder Zellen werden die zu untersuchenden Substanzen in eine Aufnahme bzw. ein Reservoir der Probenkammer gegeben und können dann mit hochauflösenden Verfahren, wie durch Lichtmikroskopie, Fluoreszenzmikroskopie, konvokale Mikroskopie, etc., untersucht werden.

Aus der EP 1 750 155 ist eine Probenkammer mit einer Deckplatte und einer fest damit verbundenen Bodenplatte bekannt, wobei in der Deckplatte eine Aussparung vorgesehen ist, so dass durch die Bodenplatte ein Reservoir gebildet wird, wobei in dem Reservoir ein flächiges Element mit Öffnungen vorgesehen ist.

Aus der WO 2007/025558 ist ein Testelement für eine qualitative und/oder quantitative Bestimmung von wenigstens einem Analyten in einer physiologischen oder wässrigen Probenflüssigkeit bekannt. Das Testelement umfasst Oberflächenbereiche mit unterschiedlichen Oberflächenenergien.

Ein Nachteil herkömmlicher Probenkammern aus Kunststoff besteht darin, dass diese leicht durch Flüssigkeiten verschmutzt werden können. So kann beispielsweise bei der Befüllung eines Flüssigkeitsreservoirs bzw. einer Flüssigkeitsaufnahme ein Teil der Flüssigkeit neben dem Reservoir platziert werden oder aus diesem austreten.

Angesichts dieses Nachteils ist es die Aufgabe der Erfindung, eine Probenkammer aus Kunststoff mit wenigstens einem Aufnahmebereich zur Aufnahme einer Flüssigkeit bereitzustellen, die ein geringeres Kontaminationsrisiko aufweist.

Diese Aufgabe wird gelöst durch eine Probenkammer gemäß Anspruch 1.

Erfindungsgemäß wird eine Probenkammer aus Kunststoff mit wenigstens einem Aufnahmebereich zur Aufnahme einer Flüssigkeit bereitgestellt, wobei die Probenkammer in einem vorherbestimmten Oberflächenbereich eine hydrophile und/oder eine oleophobe Schicht aufweist.

Durch eine derartige Schicht wird insbesondere erreicht, dass sich kontaminierende Flüssigkeiten nicht beliebig auf oder in der Probenkammer ausbreiten können. Dabei kann die Schicht insbesondere bei Raumtemperatur (in dem Bereich von etwa 20 °C bis 27 °C, insbesondere 21 °C bis 25 °C) hydrophil und/oder oleophob bzw. lipophob sein.

Die Schicht kann insbesondere lösungsmittelresistent, lösungsmittelabweisend und/oder kriechmittelabweisend sein. Lösungsmittelresistent bedeutet dabei, dass die Oberflächeneigenschaften der Schicht durch ein Lösungsmittel nicht verändert werden; insbesondere findet kein Anlösen oder Quellen statt. Lösungsmittelabweisend oder kriechmittelabweisend bedeutet, dass die Oberflächenspannung der Schicht kleiner als die Oberflächenspannung des Lösungsmittels bzw. des Kriechmittels ist. Die Lösungs- und Kriechmittel, die durch derartige Schichten abgewiesen werden sollen oder gegenüber denen eine Resistenz erzeugt werden soll, können sowohl flüssig als auch gasförmig vorliegen.

Auf diese Weise wird vermieden, dass bei der Herstellung oder dem Gebrauch der Probenkammer eingesetzte Lösungsmittel oder Kriechmittel zu einer Kontamination oder Beschädigung der Probenkammer führen. Dabei wird insbesondere verhindert, dass Lösungsmittel oder Kriechmittel Risse oder Spalten im Probenkammermaterial bilden oder in solche eindringen.

Die Schicht kann eine Oberflächenspannung von weniger als 25 mN/m, insbesondere weniger als 20 mN/m, insbesondere weniger als 15 mN/m, oder von mehr als 70 mN/m, insbesondere mehr als 72 mN/m, aufweisen. Auf diese Weise werden insbesondere die bevorzugt oleophoben oder hydrophilen Eigenschaften erzielt

Die Oberflächenspannung (oder auch Oberflächenenergie) wird nach ISO 8296:2003 bestimmt (Kunststoffe - Folien und Bahnen - Bestimmung der Benetzungsspannung, ISO 8296:2003). Die ISO 8296 (früher DIN 53 364) regelt die Beurteilung der mittleren Benetzbarkeit von Kunststoffen. Kriterium ist das Verhalten des Randes von Pinselstrichen mit Testtinten. Dabei werden Testtinten mit unterschiedlichen Oberflächenspannungen verwendet. Zieht sich der Rand des Pinselstriches innerhalb von 2 Sekunden zusammen, wird die Messung mit dem nächstniedrigeren Wert wiederholt. Verläuft der Rand des Pinselstriches nach außen, wird die Messung mit dem nächsthöheren Wert wiederholt. Die (kritische) Oberflächenenergie ist der Wert der Prüfflüssigkeit, deren Rand gerade 2 Sekunden stehen bleibt.

Bei einer hydrophilen Schicht kann es sich beispielsweise um eine SiOₓ-Schicht handeln. Bei einer oleophoben Schicht kann es sich beispielsweise um eine Silanisierung oder Silanschicht, eine Schicht aufgrund einer Plasmabehandlung, insbesondere einer Niederdruckplasmabehandlung oder einer Korona-Behandlung, handeln.

Die Schicht kann eine Schichtdicke von 1 nm bis 50 µm, insbesondere von 50 nm bis 10 µm, aufweisen. Die Schicht kann eine Fläche von 1 µm² bis 10 cm², insbesondere von 10 µm² bis 10 mm², aufweisen.

Bei den zuvor beschriebenen Probenkammern kann der vorherbestimmte Oberflächenbereich in einem Aufnahmebereich angeordnet sein. Damit lässt sich insbesondere die Flüssigkeitsverteilung im Aufnahmebereich steuern. Bei einer Mehrzahl von Aufnahmebereichen bzw. Reservoiren kann der vorherbestimmte Oberflächenbereich in vorherbestimmten Aufnahmebereichen, insbesondere in jedem Aufnahmebereich, vorgesehen sein.

Die zuvor beschriebenen Probenkammern können wenigstens zwei Aufnahmebereiche umfassen, wobei der vorherbestimmte Oberflächenbereich zwischen den wenigstens zwei Aufnahmebereichen angeordnet ist. Damit lässt sich insbesondere im Falle einer oleophoben Schicht eine Kreuzkontamination zwischen den beiden Aufnahmebereichen verhindern.

Die zuvor beschriebenen Probenkammern können eine Grundplatte umfassen, wobei die Grundplatte wenigstens eine Vertiefung und/oder wenigstens eine Erhöhung aufweist, durch die ein Aufnahmebereich gebildet wird. Beispielsweise kann die Grundplatte eine Erhöhung aufweisen, durch die zwei Aufnahmebereiche voneinander getrennt werden. Der vorherbestimmte Oberflächenbereich kann beispielsweise an dieser Erhöhung angeordnet sein, so dass ein Kriechen einer Flüssigkeit von einem Aufnahmebereich zum anderen verhindert wird.

Die Vertiefung in der Grundplatte kann einen Grund aufweisen, so dass durch die bzw. mit der Abdeckplatte ein Hohlraum gebildet wird. Damit handelt es sich bei der Vertiefung nicht um ein durchgehendes Loch, sondern um ein Sackloch. Mit einem solchen Hohlraum in der Probenkammer können von der Umgebung abgeschirmte Untersuchungen durchgeführt werden.

Die Vertiefung in der Grundplatte kann eine längliche Form aufweisen. Beispielsweise kann die Vertiefung eine Nut in der Grundplatte umfassen. In diesem Fall wird der Aufnahmebereich in Form eines Kanals und die Probenkammer in Form einer Flusskammer ausgebildet. Dabei kann insbesondere der vorherbestimmte Oberflächenbereich im Bereich der Nut, insbesondere in der Nut oder dem der Nut entsprechenden Bereich der Abdeckplatte vorgesehen sein.

Die Grundplatte und/oder die Abdeckplatte können einen von außen in den Aufnahmebereich mündenden Kanal, insbesondere ein Durchgangsloch, aufweisen. Insbesondere kann in der Grundplatte ein in den Aufnahmebereich mündendes Durchgangsloch ausgebildet sein. In der Grundplatte kann eine Nut zur Ausbildung eines Kanals vorgesehen sein. Insbesondere können zwei oder mehr in den Aufnahmebereich mündende Kanäle vorgesehen sein.

Ein derartiger Kanal dient als Zu- oder Abfluss für den Aufnahmebereich, der auf diese Weise mit Flüssigkeiten und/oder anderen Substanzen befüllt werden kann.

Die Grundplatte kann einen planaren Bereich und eine Erhöhung aufweisen, wobei in der Erhöhung eine Ausnehmung ausgebildet ist. Die Ausnehmung kann ebenfalls als Aufnahmebereich dienen und/oder zur Aufnahme einer Zuflusseinrichtung, wie einer Pipette, ausgebildet sein. Weiterhin kann ein ein- oder zweidimensionales Array von Erhöhungen (beispielsweise insgesamt 96 Erhöhungen) vorgesehen sein, wobei in jeder Erhöhung eine Ausnehmung ausgebildet ist. In diesem Fall kann der vorherbestimmte Oberflächenbereich an jeder dieser Erhöhungen angeordnet sein. Der vorherbestimmte Oberflächenbereich kann damit mehrere, räumlich getrennte Teilbereiche aufweisen.

Die Abdeckplatte kann eine Dicke von 50 bis 250 µm, vorzugsweise 100 bis 200 µm, aufweisen. Eine solche Abdeckplatte ermöglicht in vorteilhafter Weise eine Anwendung der inversen Mikroskopie.

Die Grundplatte und/oder die Abdeckplatte können einen Kunststoff, insbesondere ohne Doppelbrechung und/oder mit einer eigenen Fluoreszenz, die im Wesentlichen gleich der eigenen Fluoreszenz eines herkömmlichen Deckglases ist, umfassen. Bei dem herkömmlichen Deckglas kann es sich beispielsweise um reinweißes Glas der hydrolytischen Klasse 1, wie Menzel-Deckglas, insbesondere mit der Stärke Nr. 1,5, handeln. Ein solcherart optisch hochwertiger Kunststoff verbessert Mikroskopieuntersuchungen, insbesondere bei der Anwendung von Fluoreszenzmikroskopie. Die Abdeckplatte kann insbesondere ein flexibles Material, beispielsweise eine Folie, umfassen. Die Abdeckplatte und die Grundplatte können aus dem gleichen Material sein. Die Grundplatte und/oder die Abdeckplatte können in Form eines Spritzgusskörpers ausgebildet sein.

Die Grundplatte und/oder die Abdeckplatte können mittels Klebemittel, Lösungsmittel, UV-Behandlung, radioaktiver Behandlung, Laserbehandlung oder thermischem Verschweißen verbunden sein. Das thermische Verschweißen kann flächig oder streifenförmig, insbesondere nur entlang des Rands der Grundplatte und/oder der Abdeckplatte, erfolgt sein. Dies ermöglicht in vorteilhafter Weise eine feste Verbindung von Grundplatte und Abdeckplatte.

Mögliche Quellmittel zur Verwendung bei einem Lösungsmittelverbinden sind beispielsweise Chloroform, Aceton, Toluol, Benzol, Heptan, Ethanol, Styrol oder Mischungen davon.

Mögliche Kunststoffe für die Probenkammern, insbesondere für die Grundplatte und/oder die Abdeckplatte, sind beispielweise COC (Cyclo-Olefin-Copolymer), COP (Cyclo-Olefin-Polymer), PE (Polyethylen), PS (Polystyrol), PC (Polycarbonat) oder PMMA (Polymethylmethacrylat).

Die Grundfläche der Probenkammer kann die Abmessungen eines herkömmlichen Mikroskopieobjektträgers, insbesondere eine Breite von 25,5 mm und eine Länge von 75,5 mm, oder einer Multititerplatte aufweisen. Die Grundfläche der Probenkammer kann alternativ eine Kreisform, insbesondere mit einem Außendurchmesser von beispielsweise 35 mm oder 50 mm, aufweisen. Ein Aufnahmebereich, insbesondere jeder Aufnahmebereich, kann ein Volumen von zwischen 10 und 3000 µl, vorzugsweise zwischen 20 und 150 µl aufweisen; die Höhe kann zwischen 5 µm und 10 mm, vorzugsweise zwischen 0,1 mm und 0,5 mm, die Breite zwischen 10 µm und 40 mm, vorzugsweise zwischen 1 und 10 mm, liegen. Die Höhe der Probenkammer kann in einem planaren Bereich der Grundplatte zwischen 0,5 und 5 mm, vorzugsweise zwischen 1 und 2 mm, insbesondere bei 1,7 mm, liegen.

Weist die Grundplatte der Probenkammer eine Erhöhung auf, in der eine Vertiefung ausgebildet ist, so kann das Volumen einer derartigen Aufnahmeeinrichtung zwischen 50 µl und 3 ml, vorzugsweise zwischen 80 µl und 2,5 ml, liegen; die Höhe einer Erhöhung, ausgehend von einem planaren Bereich, kann zwischen 1 mm und 1,5 cm, vorzugsweise zwischen 5 mm und 1 cm, liegen. Bei diesen Aufnahmebereichen kann es sich insbesondere um einen durch eine Nut in der Grundplatte und eine Abdeckplatte gebildeten Hohlraum bzw. Kanal handeln.

Die Schicht kann auf einer oder mehreren Seiten der Grundplatte und/oder der Abdeckplatte vollflächig ausgebildet sein. Insbesondere bei einer oleophoben Schicht lassen sich damit Ölimmersionsobjektive zur hochauflösenden Mikroskopie in vorteilhafter Weise verwenden. Damit wird verhindert, dass bei der inversen Mikroskopie der Boden der Probenkammern mit Öl benetzt und damit verschmutzt wird. Weiterhin wird verhindert, dass das verwendete Öl in den Kunststoff der Probenkammer kriecht und Spannungsrisse verursacht. Analoge Resultate hinsichtlich einer Verhinderung des Kriechens lassen sich auch mit einer hydrophilen Schicht erzielen.

Die Schicht kann an der dem Aufnahmebereich abgewandten Seite der Grundplatte und/oder der Abdeckplatte vollflächig ausgebildet sein, insbesondere derart, dass ein Immersionsöl, insbesondere bei Ölimmersionsmikroskopie, die Schicht nicht benetzt. Die Schicht kann auf der dem Aufnahmebereich zugewandten Seite der Grundplatte und/oder der Abdeckplatte, insbesondere mit Ausnahme des Aufnahmebereichs, vollflächig ausgebildet sein.

So ist es beispielsweise von Vorteil, wenn zu verklebende Bereiche der Grundplatte und/oder der Abdeckplatte hydrophilisiert sind.

Bei den zuvor beschriebenen Probenkammern kann in einem vorherbestimmten Oberflächenbereich eine doppelte Schicht aus einer hydrophilen und einer oleophoben Schicht vorgesehen sein. Dies bedeutet, dass eine der beiden Schichten auf der anderen vorgesehen ist. Dabei kann insbesondere die unmittelbar auf den Kunststoff, insbesondere der Grundplatte oder der Abdeckplatte, aufgebrachte Schicht eine größere Fläche als die andere Schicht der doppelten Schicht aufweisen. Mit einer derartigen Doppelschicht lässt sich eine Resistenz gegenüber oder ein Abweisen von unterschiedlichen Flüssigkeiten gleichzeitig ermöglichen.

Bei den Probenkammern kann eine Mehrzahl, insbesondere von räumlich getrennten, Schichten vorgesehen sein. Damit kann gezielt an vorherbestimmten Bereichen eine geeignete Resistenz oder ein geeignetes Abweisen erzielt werden. Insbesondere kann beispielsweise in einem Bereich an der Außenseite der Probenkammer ein erster Oberflächenbereich mit einer ersten Schicht und in einem Aufnahmebereich, der beispielsweise durch einen Hohlraum gebildet wird, ein weiterer Oberflächenbereich mit einer zweiten Schicht vorgesehen sein.

Die Erfindung stellt weiterhin eine Probenkammer aus Kunststoff mit wenigstens einem Aufnahmebereich zur Aufnahme einer Flüssigkeit bereit, wobei die Probenkammer ein Gitter umfasst. Durch ein Gitter oder Raster können beispielsweise unterschiedliche Beobachtungs- oder Untersuchungsfelder definiert werden.

Die Probenkammer kann insbesondere die oben beschriebenen Elemente (beispielsweise eine wie oben beschriebene Grundplatte und/oder Abdeckplatte) und/oder Eigenschaften aufweisen.

Die Stegstärke (bzw. Stegbreite) des Gitters kann zwischen 1 µm und 1 mm, insbesondere zwischen 10 µm und 100 µm, liegen. Der Wiederholungsabstand (Gitterkonstante) zwischen den Stegen kann zwischen 10 µm und 2 mm, insbesondere zwischen 50 µm und 1000 µm, liegen. Das Gitter kann insbesondere ein Rechteckgitter, beispielsweise ein Quadratgitter, sein.

Das Gitter kann insbesondere im Bereich einer Aufnahmeeinrichtung angeordnet sein. Das Gitter kann starr oder unbeweglich angeordnet sein. Die Probenkammer kann einen Kunststoffkörper umfassen; dabei kann das Gitter als Teil des Kunststoffkörpers ausgebildet, in den Kunststoffkörper eingebracht und/oder vollflächig mit dem Kunststoffkörper verbunden sein. Wenn das Gitter als Teil des Kunststoffkörpers ausgebildet ist, bedeutet dies, dass kein zusätzliches Material für das Gitter erforderlich ist, dieses stattdessen durch eine Bearbeitung des Kunststoffkörpers erhalten wird.

Insbesondere kann das Gitter ein geprägtes Gitter sein. Auf diese Weise ist eine einfache Herstellung möglich und das resultierende Gitter in einer festen Position angeordnet.

Bei der Probenkammer kann es sich insbesondere um eine der zuvor beschriebenen Probenkammern handeln. Die Probenkammer kann eine Grundplatte und/oder eine Abdeckplatte aufweisen und das Gitter an der Grundplatte oder der Abdeckplatte angeordnet, insbesondere in die Grundplatte oder die Abdeckplatte geprägt, sein.

Das Gitter kann durch Prägen, insbesondere Heißprägen, Lasern oder Aufdrucken aufgebracht sein.

Die Erfindung stellt weiterhin ein Verfahren zum Herstellen einer Probenkammer mit einem Kunststoffkörper mit den Schritten bereit:
Bereitstellen eines Kunststoffkörpers,
Anbringen eines Gitters an dem Kunststoffkörper.

Bei der Probenkammer kann es sich insbesondere um eine der oben beschriebenen Probenkammern handeln. Bei dem Kunststoffkörper kann es sich dann um die Grundplatte oder die Abdeckplatte handeln.

Das Anbringen kann mittels Prägens, insbesondere mittels Heißprägens, Aufdruckens oder Laserns, erfolgen. Dabei kann der Schritt des Prägens mit einem Prägestempel, insbesondere einem erwärmten Prägestempel, erfolgen. Der Prägestempel bildet somit einen Abformmaster, der ein Negativ der zu prägenden Form darstellt. Der Prägestempel kann Stahl, Nickel oder Silizium umfassen.

Grundsätzlich kann der Prägestempel eine Temperatur von Raumtemperatur bis 250 °C aufweisen. Insbesondere kann die Temperatur des Prägestempels zwischen 20 °C unter und 20 °C über der Glasübergangstemperatur des Kunststoffkörpers liegen. Insbesondere kann die Temperatur des Prägestempels bei 5 °C bis 15 °C über der Glasübergangstemperatur liegen. Das Prägen kann mit einer Kraft von 100 mN bis 5 kN, insbesondere 100 N bis 2 kN, erfolgen. Die Prägezeit kann zwischen 10 ms und 1 min, insbesondere 300 ms und 5 s, liegen. Dabei kann die Prägezeit insbesondere in Abhängigkeit von der Temperatur des Prägestempels und dem Prägedruck gewählt werden.

Vor dem Schritt des Anbringens kann ein Anlösen des Kunststoffkörpers mittels einer Flüssigkeit, die ein Quellmittel für den Kunststoff ist, erfolgen. Damit wird der Kunststoffkörper (wenigstens oberflächlich) angequollen. Beispielsweise kann hierfür ein zu prägender Oberflächenbereich des Kunststoffkörpers mit der Flüssigkeit benetzt werden.

Alternativ kann das Anlösen die Schritte umfassen:
Bereitstellen der Flüssigkeit mit Raumtemperatur,

Anordnen des Kunststoffkörpers in einem vorherbestimmten Abstand oberhalb der Flüssigkeitsoberfläche, wobei eine Oberfläche des Kunststoffs dem Flüssigkeitsdampf für eine vorherbestimmte Zeitdauer ausgesetzt wird.

Das Quellmittel braucht somit nicht auf eine erhöhte Temperatur erwärmt werden, sondern kann mit Raumtemperatur bereitgestellt werden. Damit liegt auch die Temperatur des Flüssigkeitsdampfes bei der Raumtemperatur. Auch der Kunststoffkörper und/oder der Prägestempel können Raumtemperatur aufweisen. Insbesondere der Prägestempel kann auch eine Temperatur oberhalb der Raumtemperatur aufweisen. Mögliche Quellmittel zur Verwendung bei dem Verfahren sind beispielsweise Chloroform, Aceton, Toluol, Benzol, Heptan, Ethanol, Styrol oder Mischungen davon.

Der vorherbestimmte Abstand kann in den Bereich von etwa 0,1 bis 10 cm, vorzugsweise etwa 0,5 bis 5 cm, am meisten bevorzugt etwa 1 bis 2 cm, und/oder die vorherbestimmte Zeitdauer in dem Bereich von 0,2 bis 300 s, vorzugsweise etwa 0,5 bis 200 s, am meisten bevorzugt 1 bis 10 s, liegen.

Die Probenkammer kann eine Grund- und eine Abdeckplatte aus Kunststoff umfassen und der Schritt des Anbringens an der Abdeckplatte erfolgen. Auf diese Weise wird das Gitter, bevor die Grundplatte mit der Abdeckplatte verbunden wird, an der Abdeckplatte angeordnet, insbesondere im Bereich des Aufnahmebereichs zur Aufnahme einer Flüssigkeit.

Das Verfahren kann weiterhin ein Verbinden der Abdeckplatte mit einer Grundplatte umfassen. Das Verbinden kann mittels Klebemittel, Lösungsmittel, UV-Behandlung, radioaktiver Behandlung, Laserbehandlung oder thermischen Verschweißens erfolgen. Beim Verschweißen kann es sich insbesondere um Ultraschallschweißen handeln. Das thermische Verschweißen kann flächig oder streifenförmig, insbesondere nur entlang des Rands der Bodenplatte und/oder der Deckplatte, erfolgen.

Insbesondere, wenn das Anbringen ein Anlösen der Abdeckplatte umfasst, kann das Verbinden ein Aneinanderpressen der angelösten Oberfläche der Abdeckplatte und einer Oberfläche der Grundplatte, insbesondere bei Raumtemperatur, umfassen, so dass die Grundplatte und die Abdeckplatte miteinander verbunden werden. Das Anlösen der Oberfläche dient somit dem doppelten Zweck das Gitter in vereinfachter Weise anzubringen und die Grund- mit der Abdeckplatte zu verbinden. Hierfür kann der Schritt des Aneinanderpressens insbesondere unmittelbar nach dem Schritt des Anbringens des Gitters erfolgen. Ein zusätzlicher Behandlungsschritt zum Verbinden der beiden Platten ist dann nicht erforderlich.

Weitere Merkmale und Vorteile werden nachfolgend anhand der beispielhaften Figuren beschrieben. Dabei zeigt
Fig. 1 eine Explosionsansicht eines Beispiels einer Probenkammer;
Fig. 2 eine Querschnittsansicht eines Beispiels einer Probenkammer;
Fig. 3 eine Explosionsansicht eines weiteren Beispiels einer Probenkammer;
Fig. 4 eine Explosionsansicht eines Beispiels einer Probenkammer mit einem Gitter.

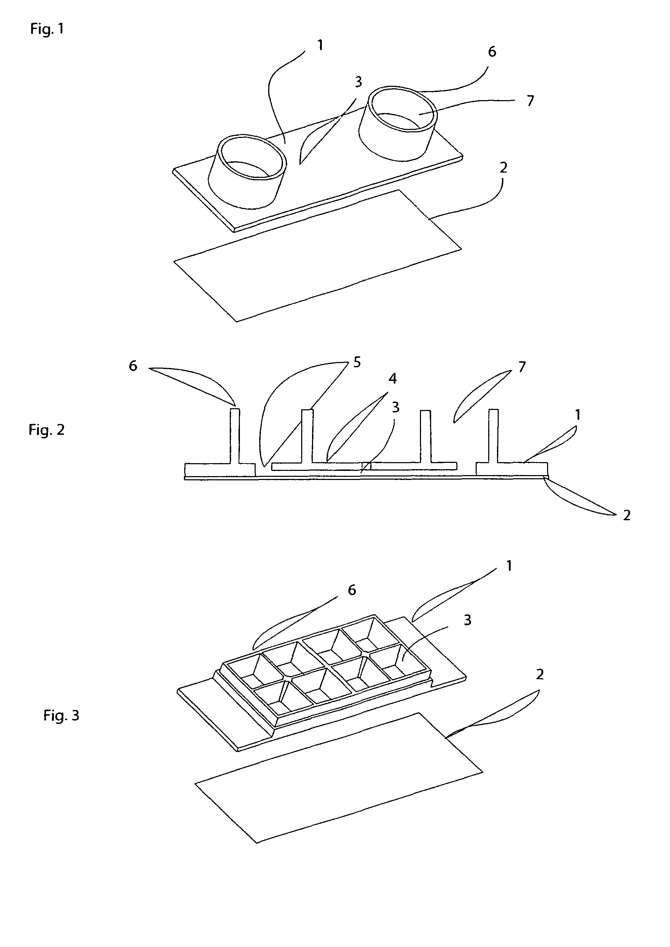

Fig. 1 illustriert schematisch ein Beispiel einer Probenkammer, die eine Grundplatte 1 und eine Abdeckplatte 2 umfasst. In der Grundplatte 1 ist eine längliche Vertiefung 3 vorgesehen. Wie sich insbesondere aus Fig. 2 ergibt, die eine der Fig. 1 entsprechende Querschnittsansicht zeigt, weist die Vertiefung 3 einen Grund auf, ist also in Form einer Nut ausgebildet, so dass auf diese Weise durch die Kombination von Abdeckplatte 2 und Grundplatte 1 eine Aufnahmeeinrichtung oder ein Reservoir in Form eines Hohlraums oder Kanals in der Probenkammer gebildet wird.

An den Enden der länglichen Vertiefung ist jeweils ein Durchgangsloch 5 in der Grundplatte ausgebildet. Die auf diese Weise gebildeten Kanäle dienen als Zufluss bzw. Abfluss für den durch die Vertiefung 3 gebildeten Aufnahmebereich. Auf diese Weise wird eine Flusskammer gebildet.

Die der Vertiefung 3 gegenüberliegende Oberfläche der Grundplatte 1 ist in einem großen Oberflächenbereich planar ausgebildet. Sie weist jedoch zwei Erhöhungen 6 auf, in denen jeweils eine Ausnehmung 7 ausgebildet ist. Auf diese Weise werden zwei weitere Aufnahmebereiche für Flüssigkeiten (Reservoire) bereitgestellt, die jeweils über ein Durchgangsloch 5 mit dem durch die Vertiefung 3 gebildeten Reservoir fluidisch verbunden sind.

Die Grundplatte und die Abdeckplatte sind aus einem Kunststoff, insbesondere aus dem gleichen Kunststoff. Die Grundplatte kann insbesondere ein Spritzgusskörper sein. Bei der Herstellung der Probenkammer, insbesondere mittels Spritzguss und anschließendem Verbinden der Grundplatte mit der Abdeckplatte, beispielsweise durch Verkleben oder Schweißen, können sich in den Kunststoffen Spannungen bilden. Weiterhin können bei der Verwendung von Klebstoffen oder Lösungsmitteln die Verbindungsstellen ein Zugang für ein Kriechmittel werden. Wenn entsprechende Lösungs- oder Kriechmittel, beispielsweise Öle, verwendet werden, können diese in die Probenkammer eindringen und zu Spannungsrissen führen.

Ein derartiges Einwandern von Kriech- oder Lösungsmitteln kann durch geeignetes Beschichten der Probenkammer verhindert werden. Dabei ist insbesondere eine hydrophile Schicht vorteilhaft.

Werden die Abdeckplatte und die Grundplatte mittels thermischen Schweißens oder Klebens miteinander verbunden, so können beispielsweise die Grundplatte und die Abdeckplatte auf einer oder mehreren Seiten vollflächig mit einer hydrophilen Schicht versehen werden. Je nach Art der durchzuführenden Untersuchungen im Aufnahmebereich 3 kann dieser Aufnahmebereich allerdings von der Schicht ausgenommen sein.

Eine derartige hydrophile Schicht kann beispielsweise mittels Plasmatechnologien erzielt werden, bei denen SiOₓ abgeschieden wird. SiOₓ weist eine Oberflächenspannung von über 72 mN/m auf. Vor allem vorherbestimmte Bereiche, beispielsweise der Aufnahmebereich, können von der Beschichtung ausgenommen werden. Hierfür werden bei der Beschichtung entsprechende Schattenmäsken verwendet.

Mögliche Verfahren für derartige Schichten ergeben sich beispielsweise aus B. Jacoby et al., "Abscheidung, Charakterisierung und Anwendung von Plasma-Polymerschichten auf HMDSO-Basis", Vakuum in Forschung und Praxis (2006), Seiten 12-18 oder D. Hegemann et al., "Deposition Rate and Three-dimensional Uniformity of RF plasma deposited SiOx films", Surface and Coating Technology (2001), Seite 849.

Werden die Grundplatte und die Abdeckplatte über ein Anlösen der Kunststoffoberfläche wenigstens einer der beiden Platten und anschließendes Aneinanderpressen miteinander verbunden, werden vorteilhafterweise die miteinander zu verbindenden Oberflächen nicht hydrophil beschichtet. In diesem Fall werden beispielsweise die jeweils von der anderen Platte abgewandten Oberflächen der Grund- bzw. Abdeckplatte hydrophil beschichtet. Damit sind dann bei der fertig gestellten Probenkammer die nach außen weisenden Oberflächen beschichtet.

Alternativ oder zusätzlich zu einer hydrophilen Schicht kann auch eine ölabweisende Schicht vorgesehen werden. Eine derartige oleophobe Schicht kann beispielsweise räumlich getrennt von einer hydrophilen Schicht oder auch auf einer hydrophilen Schicht aufgebracht werden. Derartige oleophobe Schichten haben insbesondere bei der Verwendung von Ölimmersionsobjektiven den Vorteil, dass sich die Probenkammer leicht reinigen lässt. Solche Ölimmersionsobjektive werden insbesondere bei der hochauflösenden Mikroskopie verwendet, wobei dann Immersionsöl die Probenkammer benetzt. Insbesondere bei der inversen Mikroskopie wird dann der gesamte Boden herkömmlicher Probenkammern mit Öl benetzt. Neben der schlechten Reinigungsmöglichkeiten hat ein solches Benetzen den weiteren Nachteil, dass beim Screening (Abfahren der Probenkammer) die Ölmenge abnimmt, da das Öl an der Platte haften bleibt und somit nicht mehr ausreichend Öl zwischen der Objektivlinse und dem Probenkammerboden verbleibt.

Um diese Nachteile im Zusammenhang von Immersionsobjektiven zu vermeiden, weist die oleophobe Schicht vorteilhafterweise eine geringere Oberflächenspannung als die des Immersionsmediums (Öl oder Wasser) auf. Auch ein Kriechen eines Öls in den Kunststoff der Probenkammer kann durch eine oleophobe oder auch durch eine hydrophile Schicht verhindert werden. Damit wird vermieden, dass es zu Spannungsrissen kommt oder im Kunststoff vorhandene Reststoffe (Katalysatoren, UV-Härter, Weichmacher, etc.) herausgelöst werden. Für diesen Zweck ist insbesondere eine ölabweisende Schicht mit einer Oberflächenspannung von kleiner als 20 mN/m, insbesondere kleiner als 15 mN/m, von besonderem Vorteil.

Beim Anzüchten von Embryonen werden diese regelmäßig in bis zu 5 mm großen Mediumstropfen (wässrige Lösung) kultiviert. Diese Tropfen sind in Öl eingebettet, wobei pro Probenkammer 1 bis 50 Mediumstropfen vorliegen können. Durch eine oleophobe Schicht im Aufnahmebereich wird verhindert, dass Öl in den Kunststoff eindringt und wachstumshemmende Substanzen freisetzt. In gleicher Weise kann hierfür auch eine hydrophile Schicht, beispielsweise aus SiOₓ, vorgesehen sein.

In Fig. 3 ist schematisch ein Beispiel einer weiteren Probenkammer illustriert. Diese Probenkammer umfasst ebenfalls eine Grundplatte 1 und eine Abdeckplatte 2. In der Grundplatte 1 sind acht Vertiefungen 3 vorgesehen. Diese Vertiefungen weisen keinen Grund auf und sind somit als Durchgangsloch in der Grundplatte ausgebildet. Durch entsprechende Erhöhungen 6 werden acht Aufnahmebereiche oder Reservoire gebildet, die nach oben bzw. außen vollständig offen sind.

Bei derartigen Probenkammern kann durch eine Schicht der die Reservoire trennenden Wände (Erhöhungen, Stege) eine Kreuzkontamination zwischen den Reservoiren verhindert werden. Ein Kriechen von wässrigen Medien wird dadurch minimiert. In vielen Zellmedien sind Proteine enthalten, die Oberflächen mit Oberflächenspannungen größer als 25 mN/m benetzen können. Ohne eine oleophobe Schicht werden diese Proteine bei herkömmlichen Probenkammern an den Stegen zwischen benachbarten Reservoiren adsorbiert, so dass eine Oberflächenspannung von mehr als 72 mN/m resultieren kann, was dann zu einer Kreuzkontamination führt. Eine derartige Proteinadsorption wird jedoch erfindungsgemäß durch eine lipophobe Schicht reduziert.

Wenn die Grundplatte 1 eine oleophobe oder hydrophile Schicht aufweist, die Abdeckplatte 2 jedoch nicht, resultiert dies in einer Oberflächenspannungsdifferenz zwischen dem Boden der Aufnahmebereiche (Beobachtungsbereich) und der Oberfläche der Grundplatte. Auf diese Weise wird ein negativer Kapillareffekt erzeugt, durch den ein Austreten von Probenfküssigkeit aus den Aufnahmebereichen vermieden wird.

Grundsätzlich kann die Beschichtung der Probenkammer zu unterschiedlichen Zeitpunkten durchgeführt werden. Gemäß einer ersten Alternative erfolgt die Beschichtung bei einer Probenkammer aus einer Abdeckplatte und einer Grundplatte vor dem Verbinden der beiden Platten.

Gemäß einer zweiten Alternativen können die Grundplatte und die Abdeckplatte miteinander verbunden werden und anschließend eine Beschichtungsbehandlung durchgeführt werden. Hierfür kann beispielsweise eine Plasmabehandlung mit einem Atmosphärenplasma erfolgen. Dabei wird unter einem Atmosphärenplasma ein Plasma verstanden, das nicht im Unterdruck im Verhältnis zum Atmosphärendruck gezündet wird. Insbesondere kann es sich um eine Koronabehandlung mit Umgebungsluft als Wirkgas oder um ein Atmosphärenplasma mit Stickstoff als Wirkgas handeln. Insbesondere bei der Verwendung von Stickstoff lässt sich eine besonders ausgeprägte und langlebige hydrophile Schicht erzielen. Um das Plasma beispielsweise durch Hohlraumstrukturen in der Probenkammer zu führen, ist ein Überdruck des Plasmagases vorteilhaft. Dabei sind Werte zwischen 1 bar und 8 bar besonders gut geeignet.

Eine weitere Beschichtungsanordnung besteht darin, einen Aufnahmebereich mit Ausnahme von kleinen Oberflächenbereichen, die beispielsweise einen Durchmesser zwischen 1 µm und 100 µm aufweisen, mit einer ölabweisenden Schicht zu versehen. Die ausgenommenen Bereiche können unbehandelt bleiben oder beispielsweise hydrophilisiert werden. Dadurch lassen sich Zellen auf bestimmten Spots anzüchten und ein Zellarray erzeugt werden. In einem solchen Fall kann eine Zellsuspension in den Aufnahmebereich eingebracht werden. Die Zellen adhärieren nur auf den Oberflächenbereichen, die nicht oleophob beschichtet worden sind. Danach lässt sich das Zellmedium austauschen und beispielsweise durch ein Öl oder ein serumfreies Medium ersetzen. Ein entsprechendes Ergebnis lässt sich erzielen, wenn der Aufnahmebereich vollflächig oleophob beschichtet wird und anschließend an vorherbestimmten, räumlich getrennten Stellen eine hydrophile Schicht aufgebracht wird, so dass in diesen Bereichen eine Doppelschicht aus einer oleophoben und einer hydrophilen Schicht erhalten wird.

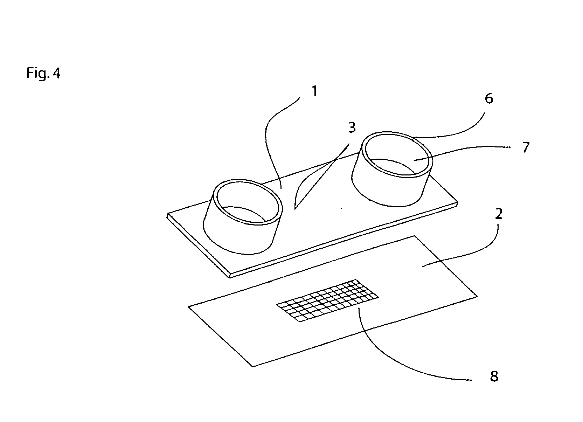

Fig. 4 illustriert schematisch eine Probenkammer, bei der im Bereich des Aufnahmebereichs ein Raster oder Gitter 8 vorgesehen ist. Bei dem gezeigten Gitter handelt es sich insbesondere um ein Rechteckgitter. Die übrigen Elemente der Probenkammer können insbesondere denen der Fig. 1 entsprechen.

Das Gitter 8 kann grundsätzlich durch Prägen, beispielsweise Heißprägen, Lasern oder Aufdrucken aufgebracht werden. Beim Aufdrucken kann insbesondere Siebdruck verwendet werden.

Alternativ wird das Gitter 8 durch Prägen in die Abdeckplatte 2 eingebracht, wofür ein entsprechender Prägestempel verwendet wird.

Zu diesem Zweck kann insbesondere die Abdeckplatte 2, die beispielsweise in Form einer Folie ausgebildet ist, mit einem Lösungsmittel (wie Chloroform, Aceton, Toluol oder Benzol oder Mischungen davon) angequollen werden. Hierfür kann die Folie insbesondere einem Quellmitteldampf ausgesetzt werden. Dann lässt sich das Gitter bei Raumtemperatur in den Kunststoff der Folie 2 prägen. Statt dass die Folie, das Quellmittel und der Prägestempel Raumtemperatur aufweisen, ist es auch möglich, dass eines oder mehrere dieser Elemente eine im Vergleich zur Raumtemperatur erhöhte Temperatur aufweisen. Beispielsweise kann der Prägestempel erwärmt sein.

Unmittelbar nach dem Prägen des Gitters kann die Abdeckplatte mit ihrer noch angelösten Oberfläche mit der Grundplatte durch Aneinanderpressen verbunden werden. Auch dieser Schritt kann insbesondere bei Raumtemperatur erfolgen. Damit wird durch das Lösungsmittel einerseits das Prägen des Gitters vereinfacht und andererseits das Verschweißen mittels Lösungsmittel ermöglicht. Für das Verbinden kann weiterhin auch die der Abdeckplatte zugewandte Oberfläche der Grundplatte angequollen werden. Weiterhin ist es von Vorteil, wenn beide Platten aus dem gleichen Kunststoff bestehen.

Es versteht sich, dass die zuvor beschriebenen Merkmale auch in anderer Weise miteinander kombiniert werden können. Weiterhin können insbesondere die erläuterten Beschichtungsmöglichkeiten und -anordnungen auch z. B. für Probenkammern eingesetzt werden, die lediglich aus einem Kunststoffkörper bestehen, beispielsweise einem Spritzgusskörper, und nicht durch Verbinden einer Grundplatte mit einer Abdeckplatte hergestellt werden müssen. Bei derartigen Probenkammern wird beispielsweise der Aufnahmebereich (Reservoir) durch eine Vertiefung mit Grund- und/oder Erhöhungen gebildet.

## Patentansprüche

1. Probenkammer aus Kunststoff mit wenigstens zwei Aufnahmebereichen zur Aufnahme einer Flüssigkeit, wobei die Probenkammer in einem vorherbestimmten Oberflächenbereich zwischen den wenigstens zwei Aufnahmebereichen eine hydrophile Schicht aus SiOₓ aufweist,
wobei die Probenkammer eine Grundplatte (1) und eine fest damit verbundene Abdeckplatte (2) umfasst und die Schicht an der den Aufnahmebereichen abgewandten Seite der Grundplatte (1) und/oder Abdeckplatte (2) ausgebildet ist,
oder
wobei die Probenkammer aus einem Kunststoffkörper besteht und die Schicht an einer den Aufnahmebereichen abgewandten Seite des Kunststoffkörpers ausgebildet ist.

2. Probenkammer aus Kunststoff mit wenigstens einem Aufnahmebereich zur Aufnahme einer Flüssigkeit, wobei die Probenkammer in einem vorherbestimmten Oberflächenbereich eine hydrophile Schicht aus SiOₓ aufweist, und
wobei die Probenkammer eine Grundplatte (1) und eine fest damit verbundene Abdeckplatte (2) umfasst und die Schicht an der dem Aufnahmebereich abgewandten Seite der Grundplatte (1) und/oder Abdeckplatte (2) vollflächig ausgebildet ist,
oder
wobei die Probenkammer aus einem Kunststoffkörper besteht und die Schicht an einer dem Aufnahmebereich abgewandten Seite des Kunststoffkörpers vollflächig ausgebildet ist.

3. Probenkammer nach Anspruch 1 oder 2, wobei die Schicht eine Oberflächenspannung von mehr als 70 mN/m aufweist.

4. Probenkammer nach einem der vorangegangenen Ansprüche, wobei die Schicht eine Schichtdicke von 1 nm bis 50 µm, insbesondere von 50 nm bis 10 µm, aufweist.

5. Probenkammer nach einem der vorangegangenen Ansprüche, wobei die Schicht eine Fläche von 1 µm² bis 10 cm², insbesondere von 10 µm² bis 10 mm², aufweist.

6. Probenkammer nach einem der vorangegangenen Ansprüche, wobei in der Grundplatte eine Vertiefung vorgesehen ist, so dass durch die Grundplatte und die Abdeckplatte ein Aufnahmebereich gebildet wird.

7. Probenkammer nach einem der vorangegangenen Ansprüche, wobei die Abdeckplatte in Form einer Folie oder in Form eines Spritzgusskörpers ausgebildet ist.

8. Probenkammer nach einem der vorangegangenen Ansprüche, wobei in einem vorherbestimmten Oberflächenbereich eine doppelte Schicht aus einer hydrophilen und einer oleophoben Schicht vorgesehen ist.

9. Probenkammer nach einem der vorangegangenen Ansprüche, wobei eine Mehrzahl, insbesondere von räumlich getrennten, Schichten vorgesehen ist.

10. Probenkammer nach einem der vorangegangenen Ansprüche, umfassend ein Gitter.

## Claims

1. Sample chamber of plastics with at least two receiving areas for receiving a liquid,
wherein the sample chamber comprises a hydrophilic layer of SiOₓ in a predetermined surface area between the at least two receiving areas,
wherein the sample chamber comprises a base plate (1) and a cover plate (2) firmly connected thereto and wherein the layer is embodied on the side of the base plate (1) and/or the cover plate (2) facing away from the receiving areas,
or
wherein the sample chamber consist of a plastic body and wherein the layer is embodied on a side of the plastic body facing away from the receiving areas.

2. Sample chamber of plastics with at least one receiving area for receiving a liquid,
wherein the sample chamber comprises a hydrophilic layer of SiOₓ in a predetermined surface area,
wherein the sample chamber comprises a base plate (1) and a cover plate (2) firmly connected thereto and wherein the layer is embodied all-over the side of the base plate (1) and/or the cover plate (2) facing away from the receiving area,
or
wherein the sample chamber consist of a plastic body and wherein the layer is embodied all-over a side of the plastic body facing away from the receiving area.

3. Sample chamber according to claim 1 or 2, wherein the layer has a surface tension of more than 70 mN/m.

4. Sample chamber according to one of the preceding claims, wherein the layer has a layer thickness of 1 nm to 50 µm, in particular of 50 nm to 10 µm.

5. Sample chamber according to one of the preceding claims, wherein the layer has an area of 1 µm² to 10 cm², in particular of 10 µm² to 10 mm².

6. Sample chamber according to one of the preceding claims, wherein a depression is provided in the base plate, so that a receiving area is formed by the base plate and the cover plate.

7. Sample chamber according to one of the preceding claims, wherein the cover plate is formed in the form of a film or in the form of an injection molded body.

8. Sample chamber according to one of the preceding claims, wherein a double layer of a hydrophilic and an oleophobic layer is provided in a predetermined surface area.

9. Sample chamber according to one of the preceding claims, wherein a plurality of layers which are in particular spatially separated is provided.

10. Sample chamber according to one of the preceding claims, comprising a lattice.

## Revendications

1. Chambre d'échantillons en plastique avec au moins deux zones de réception destinées à recevoir un liquide, la chambre d'échantillons comportant une couche hydrophile en SiOₓ dans une zone de surface prédéterminée entre les deux zones de réception,
la chambre d'échantillons comprenant une plaque de fond (1) et une plaque de couverture (2) reliée de manière fixe à celle-ci et la couche étant conçue sur celui des côtés de la plaque de fond (1) et/ou de la plaque de couverture (2) qui est éloigné des zones de réception,
ou
la chambre d'échantillons étant constituée d'un corps en plastique et la couche étant conçue sur celui des côtés du corps en plastique qui est éloigné des zones de réception.

2. Chambre d'échantillons en plastique avec au moins une zone de réception destinée à recevoir un liquide, la chambre d'échantillons comportant une couche hydrophile en SiOₓ dans une zone de surface prédéterminée,
la chambre d'échantillons comprenant une plaque de fond (1) et une plaque de couverture (2) reliée de manière fixe à celle-ci et la couche étant formée sur toute la surface de celui des côtés de la plaque de fond (1) et/ou de la plaque de couverture (2) qui est éloigné de la zone de réception,
ou
la chambre d'échantillons étant constituée d'un corps en plastique et la couche étant formée sur toute la surface de celui des côtés du corps en plastique qui est éloigné de la zone de réception.

3. Chambre d'échantillons selon la revendication 1 ou 2, la couche ayant une tension superficielle de plus de 70 mN/m.

4. Chambre d'échantillons selon l'une des revendications précédentes, la couche ayant une épaisseur de 1 nm à 50 um, en particulier de 50 nm à 10 µm.

5. Chambre d'échantillons selon l'une des revendications précédentes, la couche ayant une surface de 1 µm2 à 10 cm², en particulier de 10 µm² à 10 mm².

6. Chambre d'échantillons selon l'une des revendications précédentes, un creux étant prévu dans la plaque de fond de telle sorte qu'une zone de réception est formée par la plaque de fond et par la plaque de couverture.

7. Chambre d'échantillons selon l'une des revendications précédentes, la plaque de couverture étant conçue sous forme de feuille ou sous forme de corps moulé par injection.

8. Chambre d'échantillons selon l'une des revendications précédentes, une double couche constituée d'une couche hydrophile et d'une couche oléophobe étant prévue dans une zone de surface prédéterminée.

9. Chambre d'échantillons selon l'une des revendications précédentes, plusieurs couches, en particulier séparées spatialement les unes des autres, étant prévues.

10. Chambre d'échantillons selon l'une des revendications précédentes, comprenant une grille.
